# EUROPEAN PATENT SPECIFICATION

(11) **EP 2 666 584 B1**
(45) Date of publication and mention of the grant of the patent: **25.03.2015**
(21) Application number: 13425071.1
(22) Date of filing: 10.05.2013
(51) Int. Cl.: B23Q 1/52, B21D 43/14, B23D 47/04

(54) **Rotation unit**
Dreheinheit
Unité de rotation

(30) Priority: 23.05.2012 IT RM20120232
(43) Date of publication of application: 27.11.2013
(73) Proprietor: SCM Group S.p.A., 47921 Rimini (RN) (IT)
(72) Inventor: Gabrielli, Arcadio, 47921 Rimini (RN) (IT)
(74) Representative: Tiburzi, Andrea

(56) References cited:
- EP-A1- 0 470 482
- DE-A1- 3 607 454
- DE-U1- 29 703 395

## Description

The present invention relates to a rotation unit.

More specifically, the invention concerns a unit for the rotation of a work table, studied and realized in particular to allow higher production efficiency.

In the following, the description will be directed to the rotation of planes for the support of wood panels, but it is clear that the same should not be considered limited to this specific use.

As it is well known, current systems for cutting and machining panels comprise, in general, a main table with motorized rollers and motorized groups for the rotation of the work pieces, also known in the industry as piece-rotators groups or units. Said piece-rotator groups or units are generally arranged laterally with respect to said motorized rollers main table, so that an operator can take the pieces from said main table, so as to rotate them by hand. It is evident that this type of plant has obvious productivity limits, due to the need of human intervention in the workpiece moving phase.

Piece-rotator devices are known in the prior art, such as that described in patent application n. DE 19617413 A1, which has a rotating drum arranged on the edge of the motorized rollers main table. The pieces to be rotated, while moved along said main table by motorized rollers, are oriented with a particular orientation element obtained always on the edge of said main table, in order to successively interact with the rotating drum, so as to rotate the workpiece.

This kind of device, though it has the advantage of rotating the workpiece during the sliding of the same on the motorized rollers table, does not allow high performance in terms of speed. Therefore, this type of device may slow down the overall performance of high speed machining plants. Furthermore, the described device has the additional limitation of not allowing the rotation of stacked panel packs, as it would risk to upset the arrangement.

EP-0470482 discloses a rotation unit according to the preamble of claim 1.

In view of the above, it is an object of the present invention, therefore, to propose a rotation unit or piece-rotator, capable of rotating a plane with high accuracy, without the intervention of an operator.

It is therefore a specific object of the present invention a rotation unit comprising a first guide, a second guide, a support table, having a first point, constrained to slide on said first guide, and a second point constrained to slide along said second guide, and motion actuation means of said table, **characterized in that** said motion actuation means comprise a rack, made as an arc of a circumference having the geometric center on said second point, said rack being integral to said table in correspondence of said second point, a slide prismatically sliding on said second guide, said slide being rotatably coupled with said table in correspondence of said second point, and a motorized pinion, associated with said slide and engaged with said rack, said pinion being adapted to determine, with its actuation, the relative rotation between said table and said slide.

Always according to the invention, said table could have a rectangular shape.

Still according to the invention, said first point could be a vertex of said table.

Further according to the invention, said second point could be arranged at the midpoint of the side of said rectangular table opposite to that which forms the vertex of said table in which said first point is arranged.

Advantageously according to the invention, said second guide could be constituted by a rail, and said slide could comprise sliding blocks engaged with said rail.

Always according to the invention, said first and said second guide could be arranged at an angle, preferably equal to approximately 45°, and ideally meet at an origin point.

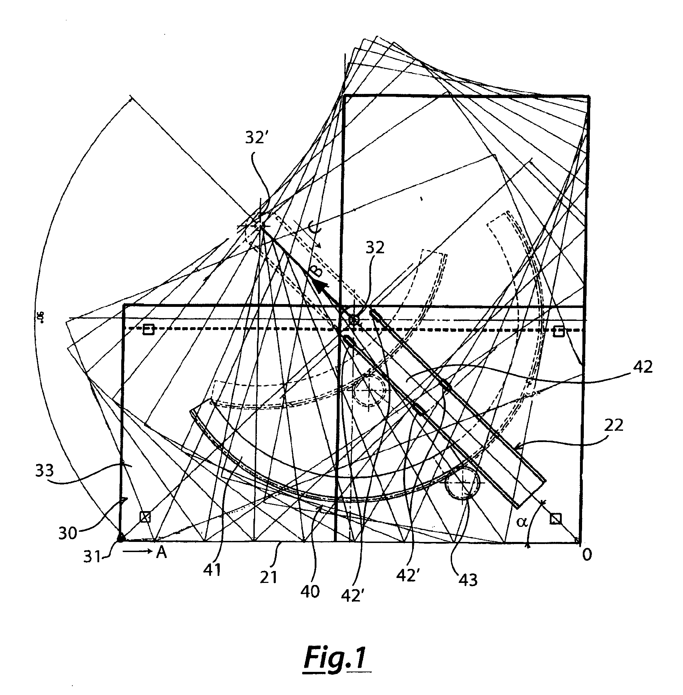

The present invention will be now described, for illustrative but not limitative purposes, according to its preferred embodiments, with particular reference to the enclosed figure, wherein it is shown a schematic plan view of the rotation unit according to the present invention.

Referring to the figure, it is seen a rotation unit or piece-rotator 1 comprising a first and a second guide, respectively indicated by reference numbers 21 and 22, arranged at an angle α of 45° between them, which meet each other ideally in an origin point , indicated by O.

Said pieces-rotator rotation unit 1 also comprises a table 30, rectangular in shape, but that can take any shape, according to the specific needs, having a first point 31, positioned in correspondence of a vertex of said table 30, constrained to slide on said first guide 21, and a second point 32, positioned in correspondence of the midpoint of the longer side of said rectangular table 30, constrained to slide along said second guide 22. Said table 30 also comprises an upper plane 33, on which the pieces to be turned can be arranged, and a lower plane, opposite to said upper plane 33. Said table 30 is adapted to support the pieces to turn or to rotate with respect to an axis perpendicular to it to said upper plane 33.

Further, said rotation or piece-rotator unit 1 also comprises motion actuation means 40, comprising a circular rack 41, i.e. that is an arc of an ideal circumference having the (geometric) center arranged at said second point 32. Said rack 41 is positioned or obtained on said lower plane of said table 30. Said motion actuation means 40 also includes a slide 42, prismatically sliding on said second guide 22.

In particular, said slide 42 is provided with sliding blocks 42', slidably coupled with said second guide 22, which, in the embodiment concerned, is constituted by a rail. Said slide 42 is also rotatably coupled with or pivoted with said table 30, in correspondence to said second point 32.

Finally, said motion actuation means 40 includes a powered pinion 43, which activation motor is not visible in the figure. Said pinion 43 is associated with said slide 42 and engaged with said rack 41.

The operation of the rotating unit or piece-rotator 1 described above is as follows.

It is considered an initial position (for example), in which said first point 31 is located at a distance from the origin point O, such that the rectangular table 30 has the longer side, on which said first point 31 is located, arranged along said first guide 21. In said initial position, said powered pinion 43 is located at one end of the arc identified by said rack 41.

Following the activation by the respective motor, said pinion 43, which is engaged with said circular rack 41, rotates said table 30. In this way, said first point 31 slides along said first guide 21 along arrow A, said slide 42 slides along said second guide 22 in the direction of arrow B, until the second point 32 reaches point 32'. Subsequently, said first point 31 continues to slide along said first guide 21 along arrow A, until it reaches the origin point O, and said slide 42 inverts its sliding direction, sliding along arrow C, which has a direction opposite to arrow B. Once first point 31 reaches origin point O, table 30 is in a final position, rotated by 90° with respect to the initial position.

The enclosed figure shows some intermediate positions of the table 30, while passing from said initial position to said final position, which shows the same table 30 and the motion actuation means 40 with dashed lines.

Of course, for rotating again in the opposite direction the table 30, it is sufficient to actuate said powered pinion 43 in the opposite rotation direction, so as to bring said first point 31 from said origin point O to the point in which it is located at a distance from the origin point O, such that the rectangular table 30 has the longer side on which is located said first point 31, arranged along said first guide 21.

An advantage of the present invention is that the rotation unit or pieces-rotator allows rotation even of a stack of panels.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Rotation unit (1) comprising
a first guide (21),
a second guide (22),
a support table (30), having a first point (31), constrained to slide on said first guide (21), and a second point (32) constrained to slide along said second guide (22), and
motion actuation means (40) of said table (30),
**characterized in that** said motion actuation means (40) comprise
a rack (41), made as an arc of a circumference having the geometric center on said second point (32), said rack (41) being integral to said table (30) in correspondence of said second point (32),
a slide (42) prismatically sliding on said second guide (22), said slide (42) being rotatably coupled with said table (30) in correspondence of said second point (32), and
a motorized pinion (43), associated with said slide (42) and engaged with said rack (41), said pinion (43) being adapted to determine, with its actuation, the relative rotation between said table (30) and said slide (42).

2. Unit (1) according to claim 1, **characterized in that** said table (30) has a rectangular shape.

3. Unit (1) according to claim 2, **characterized in that** said first point (31) is a vertex of said table (30).

4. Unit (1) according to anyone of claims 2 or 3, **characterized in that** said second point (32) is arranged at the midpoint of the side of said rectangular table (30) opposite to that which forms the vertex of said table (30) in which said first point (31) is arranged.

5. Unit (1) according to anyone of the preceding claims, **characterized in that** said second guide is constituted by a rail (22), and **in that** said slide (42) comprises sliding blocks (42') engaged with said rail (22).

6. Unit (1) according to anyone of the preceding claims, **characterized in that** said first (21) and said second (22) guide are arranged at an angle (α) and ideally meet at an origin point (O).

7. Unit (1) according to claim 6, **characterized in that** said angle (α) is equal to approximately 45°.

## Patentansprüche

1. Dreheinheit (1), umfassend
eine erste Führung (21),
eine zweite Führung (22),
einen Auflagetisch (30), aufweisend einen ersten Punkt (31), der eingeschränkt ist, auf der ersten Führung (21) zu gleiten, und einen zweiten Punkt (32), der eingeschränkt ist, auf der zweiten Führung (22) zu gleiten, und
eine Bewegungsbetätigungseinrichtung (40) des Tisches (30), **dadurch gekennzeichnet, dass** die Bewegungsbetätigungseinrichtung (40) umfasst:
ein Gestell (41), hergestellt als ein Bogen mit einem Umfang, dessen geometrisches Zentrum auf dem zweiten Punkt (32) liegt, wobei das Gestell (41) integral mit dem Tisch (30) ausgeführt ist, korrespondierend zu dem zweiten Punkt (32),
ein Schieber (42), der prismatisch auf der zweiten Führung (22) gleitet, wobei der Schieber (42) drehbar mit dem Tisch (30) korrespondierend zu dem zweiten Punkt (32) gekoppelt ist, und
ein motorisiertes Ritzel (43), das dem Schieber (42) zugeordnet ist und im Eingriff mit dem Gestell (41) ist, wobei das Ritzel (43) angepasst ist, um mit seiner Betätigung die relative Drehung zwischen dem Tisch (30) und dem Schieber (42) festzulegen.

2. Einheit (1) nach Anspruch 1, **dadurch gekennzeichnet, dass** der Tisch (30) eine rechteckige Form aufweist.

3. Einheit (1) nach Anspruch 2, **dadurch gekennzeichnet, dass** der erste Punkt (31) ein Eckpunkt des Tisches (30) ist.

4. Einheit (1) nach einem der Ansprüche 2 oder 3, **dadurch gekennzeichnet, dass** der zweite Punkt (32) am Mittelpunkt der Seite des rechteckförmigen Tisches (30) angeordnet ist, die gegenüberliegend zu derjenigen ist, die den Eckpunkt des Tisches (30) bildet, an dem der erste Punkt (31) angeordnet ist.

5. Einheit (1) nach einem der vorhergehenden Ansprüche, **dadurch gekennzeichnet, dass** die zweite Führung aus einer Schiene (22) gebildet ist und dass der Schieber (42) Gleitstücke (42') aufweist, die mit der Schiene (22) im Eingriff stehen.

6. Einheit (1) nach eine der vorhergehenden Ansprüche, **dadurch gekennzeichnet, dass** die erste (21) und die zweite (22) Führung in einem Winkel (α) angeordnet sind und sich idealerweise am Ursprungspunkt (O) treffen.

7. Einheit (1) nach Anspruch 6, **dadurch gekennzeichnet, dass** der Winkel (α) ungefähr 45° groß ist.

## Revendications

1. Unité de rotation (1) comprenant
un premier guide (21),
un second guide (22),
une table support (30), présentant un premier point (31) contraint de coulisser sur ledit premier guide (21), et un second point (32) contraint de coulisser le long dudit second guide (22), et
un moyen d'actionnement de mouvement (40) de ladite table (30),
**caractérisé en ce que** ledit moyen d'actionnement de mouvement (40) comprend :
une crémaillère (41), réalisée sous forme d'arc de cercle dont le centre géométrique est situé sur ledit second point (32), ladite crémaillère (41) étant solidaire de ladite table (30) en correspondance avec ledit second point (32),
une glissière (42) coulissant de façon prismatique sur ledit second guide (22), ladite glissière (42) étant couplée à rotation à ladite table (30) en correspondance avec ledit second point (32), et
un pignon motorisé (43), associé à ladite glissière (42) et en prise avec ladite crémaillère (41), ledit pignon (43) étant adapté à déterminer, par son actionnement, la rotation relative entre ladite table (30) et ladite glissière (42).

2. Unité (1) selon la revendication 1, **caractérisée en ce que** ladite table (30) a une forme rectangulaire.

3. Unité (1) selon la revendication 2, **caractérisée en ce que** ledit premier point (31) est un sommet de ladite table (30).

4. Unité (1) selon l'une quelconque des revendications 2 ou 3, **caractérisée en ce que** ledit second point (32) est disposé au milieu du côté de ladite table rectangulaire (30) opposé à celui qui forme le sommet de ladite table (30), dans lequel est disposé ledit premier point (31).

5. Unité (1) selon l'une quelconque des revendications précédentes, **caractérisée en ce que** ledit second guide est constitué d'un rail (22), et **en ce que** ladite glissière (42) comprend des coulisseaux (42') en prise avec ledit rail (22).

6. Unité (1) selon l'une quelconque des revendications précédentes, **caractérisée en ce que** ledit premier guide (21) et ledit second guide (22) sont disposés avec un angle (α) et se rencontrent idéalement à un point d'origine (O).

7. Unité (1) selon la revendication 6, **caractérisée en ce que** ledit angle (α) est égal approximativement à 45°.
